# EUROPÄISCHE PATENTSCHRIFT

(11) **EP 3 410 458 B1**
(45) Veröffentlichungstag und Bekanntmachung des Hinweises auf die Patenterteilung: **22.05.2019**
(21) Anmeldenummer: 17174254.7
(22) Anmeldetag: 02.06.2017
(51) Int. Cl.: H01H 47/00, G05B 9/02, G05B 19/048

(54) **MODULARE SICHERHEITSRELAISSCHALTUNG ZUM SICHEREN EIN- UND/ODER AUSSCHALTEN ZUMINDEST EINER MASCHINE**
MODULAR SAFETY RELAY CIRCUIT FOR THE SAFE SWITCHING ON AND/OR DISCONNECTING OF AT LEAST ONE MACHINE
CIRCUIT À RELAIS DE SÉCURITÉ MODULAIRE DESTINÉ À SÉCURISER ET/OU DÉSACTIVER AU MOINS UNE MACHINE

(43) Veröffentlichungstag der Anmeldung: 05.12.2018
(73) Patentinhaber: Sick AG, 79183 Waldkirch (DE)
(72) Erfinder: WEIDENMÜLLER, Jonas, 79100 Freiburg (DE); DOLD, Franz, 78120 Furtwangen (DE); BEHRE, Frederik, 79365 Rheinhausen (DE)

(56) Entgegenhaltungen:
- DE-A1-102004 033 359
- DE-C1- 19 956 698

## Beschreibung

Die Erfindung betrifft eine modulare Sicherheitsrelaisschaltung zum sicheren Ein- und/oder Ausschalten zumindest einer Maschine nach Anspruch 1.

In der heutigen Automatisierungsindustrie wird eine Gesamtanlage durch zumindest eine Sicherheitssteuerung autonom derart gesteuert, dass die Maschine ihre zugeordnete Aufgabe durchführt und gegebenenfalls mit einer anderen Maschine interagiert. Hierbei muss die Gesamtanlage trotz eines hohen Automatisierungsgrads ein ausreichendes Sicherheitslevel vor möglichen Verletzungen von Personen oder Ausfall der Gesamtanlage aufweisen und dementsprechend beispielsweise die Vorgaben der Norm EN ISO 13849 erfüllen.

Um die hohen Sicherheitsvorgaben zu erfüllen, werden mittels Sensoren beispielsweise eine Umgebung der Maschine, eine Position und/oder eine Bewegung der Maschine überwacht, wobei bei einem nicht vorgesehenen Betriebszustand die Sicherheitssteuerung zumindest eine Sicherheitsrelaisschaltung betätigt, die die Maschine abschaltet.

Die Sicherheitsrelaisschaltung ist grundsätzlich bekannt und weist zumindest ein Relaismodul mit Eingangsanschlüsse und Ausgangsanschlüsse auf. An den Eingangsanschlüssen erhält die Sicherheitsrelaisschaltung Eingangssignale, wobei die Eingangssignale von zumindest einem angeschlossenen Signalgeber bereitgestellt werden, und über die Ausgangsanschlüsse werden Ausgangssignale an die zumindest eine an das Relaismodul angeschlossene Maschine kommuniziert, wobei die Ausgangssignale von einer Steuereinheit der Sicherheitsrelaisschaltung in Abhängigkeit der Eingangssignale erstellt werden.

Mit anderen Worten, anhand der Eingangssignale des angeschlossenen Signalgebers ist das Relaismodul in der Lage, die angeschlossene Maschine sicher auszuschalten und auch wieder einzuschalten. Hierzu umfasst das Relaismodul vor dessen Ausgangsanschlüsse Relaiskontakte, die mittels beispielsweise einer Steuerwicklung zum Schließen bzw. zum Öffnen aktiviert werden.

Hierbei wird zumeist ein Relaiskontakt stärker belastet als ein anderer Relaiskontakt des Relaismoduls, so dass dieser stärker belastete Relaiskontakt theoretisch eine Lebensdauer des gesamten Relaismoduls bestimmt. Die DE 10 2004 033359 A1 offenbart eine bereits bekannte Sicherheitsrelaisschaltung, gemäß der Präambel des Anspruchs 1, in der Relaiskontakte zur Verteilung der Belastung abwechselnd verzögert betätigt werden um die Lebensdauer zu erhöhen.

Es ist daher eine Aufgabe der Erfindung, eine modulare Sicherheitsrelaisschaltung zum sicheren Ein- und/oder Ausschalten zumindest einer Maschine zur Verfügung zu stellen, mit der eine Erhöhung der Lebensdauer des Relaismoduls möglich ist.

Die Aufgabe wird erfindungsgemäß gelöst durch eine modulare Sicherheitsrelaisschaltung zum sicheren Ein- und/oder Ausschalten zumindest einer Maschine, mit zumindest einem Relaismodul, an dem die zumindest eine Maschine angeschlossen ist, wobei das Relaismodul mindestens zwei in Reihe geschaltete Relaiskontakte umfasst, die von einer ersten Stellung in eine zweite Stellung und vice versa bringbar sind, und wobei ein Relaiskontakt durch eine Verzögerung des anderen Relaiskontaktes voreilend schaltet, und einer die Relaiskontakte ansteuernden Steuereinheit, die die Relaiskontakte gemäß einer Zustandserfassung der Relaiskontakte alternierend mit der Verzögerung ansteuert.

Hierdurch ergibt sich der Vorteil, dass die Relaiskontakte gleichmäßig abgenutzt werden, so dass eine maximal mögliche Schaltanzahl des Relaismoduls erhöht werden kann.

Gemäß einem bevorzugten Ausführungsbeispiel sind in der ersten Stellung die Relaiskontakte geschlossen und in der zweiten Stellung die Relaiskontakte geöffnet oder sind in der ersten Stellung die Relaiskontakte geöffnet und in der zweiten Stellung die Relaiskontakte geschlossen. Ferner umfasst vorteilhafterweise die Steuereinheit ein Logikbaustein, der die Verzögerung beim Schalten des verzögert angesteuerten Relaiskontaktes ausführt. Hierdurch kann eine Einstellung der Verzögerung auf einfachster Art und Weise verändert werden.

Gemäß einem weiteren bevorzugten Ausführungsbeispiel ist bei einem Übergang der Relaiskontakte von der ersten Stellung in die zweite Stellung die Verzögerung des Schaltens im einstelligen Millisekunden-Bereich. Das Relaismodul weist damit weiterhin ein sicheres Antwortverhalten auf, obwohl die Relaiskontakte kontrolliert verzögert geschaltet werden.

Gemäß einem weiteren bevorzugten Ausführungsbeispiel ist bei einem Übergang der Relaiskontakte von der zweiten Stellung in die erste Stellung die Verzögerung des Schaltens im zwei- bis dreistelligen Millisekunden-Bereich, da ein Einschaltvorgang der Maschine weniger zeitkritisch ist als eine Abschaltung derselben.

Gemäß einem weiteren bevorzugten Ausführungsbeispiel umfasst die Zustandserfassung zum Wechseln des Relaiskontaktes mit der Verzögerung eine Anzahl an getätigten Schaltzyklen der Relaiskontakte. Auf diesem Wege kann die Steuereinheit vollautomatisch den Verschleiß der Relaiskontakte überwachen und steuern.

Gemäß einem weiteren bevorzugten Ausführungsbeispiel ist die Verzögerung durch einen Bediener manuell zu- oder abschaltbar, wodurch der Bediener sehr einfach zwischen einer hohen Ansprechzeit, nämlich Ausschalten der Verzögerung, oder einer längeren Lebensdauer, nämlich Einschalten der Verzögerung, des Relaismoduls bzw. dessen Relaiskontakte wählen kann.

Die Erfindung wird nachstehend auch hinsichtlich weiterer Vorteile und Merkmale unter Bezugnahme auf die beigefügte Zeichnung anhand von Ausführungsbeispielen erläutert. Die Figur der Zeichnung zeigt in:

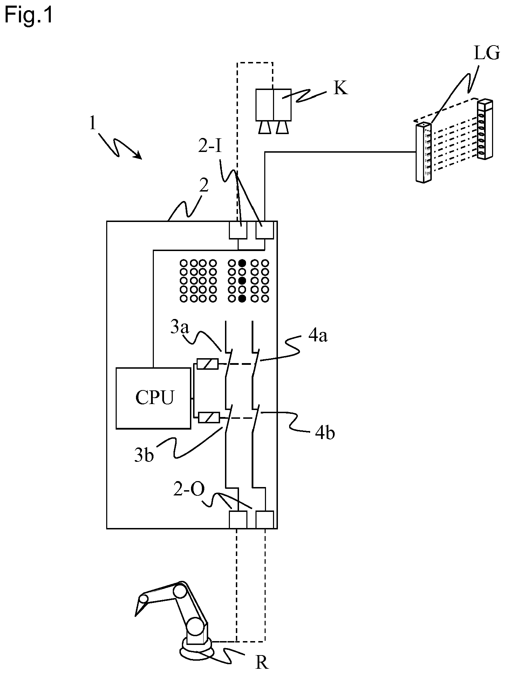

- Fig. 1: eine schematische Darstellung einer erfindungsgemäßen modularen Sicherheitsrelaisschaltung in einer Automatisierungsanlage.

Die Figur 1 zeigt schematisch eine Automatisierungsanlage, die eine erfindungsgemäße modulare Sicherheitsrelaisschaltung 1 umfasst, an die eine Maschine angeschlossen ist. Die Sicherheitsrelaisschaltung 1 schaltet einen Laststromkreis ein bzw. aus, der die, beispielhaft als Roboterarm R dargestellte, Maschine mit Energie versorgt. Hierbei kann das Ein- und Ausschalten der Maschine sicher durchgeführt sein oder nur ein sicheres Einschalten oder nur ein sicheres Ausschalten, so dass unterschiedliche Anwendungsfälle durch die Sicherheitsrelaisschaltung 1 erfüllt werden können.

Die dargestellte Sicherheitsrelaisschaltung 1 umfasst ein Relaismodul 2, das Eingangsanschlüsse 2-I und Ausgangsanschlüsse 2-O aufweist, wobei an den Eingangsanschlüssen 2-I beispielweise eine Kamera K und ein Lichtgitter LG als Signalgeber angeschlossen sein können. An dem Ausgangsanschluss 2-O ist der Roboterarm R angeschlossen, so dass in Abhängigkeit von den Signalen der Kamera K bzw. des Lichtgitters LG das Relaismodul 2 eine Stromversorgung zu dem Roboterarm R ab- bzw. einschalten kann.

Die Signale der Signalgeber werden einer Steuereinheit CPU zugeführt, die die Signale auswertet. Anhand der Auswertung erzeugt die Steuereinheit CPU entsprechende Steuersignale, um den Roboterarm R sicher zu steuern. Das heißt beispielsweise, im Falle, dass ein Schutzfeld des Lichtgitters LG unterbrochen ist, erzeugt die Steuereinheit CPU ein entsprechendes Steuersignal, um den Roboterarm R von der Stromversorgung zu trennen. Bleibt das Schutzfeld des Lichtgitters LG weiterhin unterbrochen, lässt die Steuereinheit CPU ein Wiedereinschalten des Roboterarms R nicht zu.

Hierzu umfasst das Relaismodul 2 erfindungsgemäß mindestens zwei in Reihe geschaltete Relaiskontakte 3a, 3b und 4a, 4b, die von einer ersten Stellung in eine zweite Stellung und vice versa bringbar sind. Beispielshaft sind die Relaiskontakte 3a, 3b und 4a, 4b in der ersten Stellung geschlossen und in der zweiten Stellung geöffnet. In der ersten, geschlossenen Stellung der Relaiskontakte 3a, 3b und 4a, 4b ist der Roboterarm R an den Ausgangsanschlüssen 2-O des Relaismoduls 2 mit der Stromversorgung verbunden und in der zweiten, geöffneten Stellung der Relaiskontakte 3a, 3b und 4a, 4b ist der Roboterarm R von der Stromversorgung getrennt.

Dieses Beispiel kann je nach gefordertem Anwendungsfall auch entgegengesetzt ausgestaltet sein. Das heißt, bei geforderter Trennung des Roboterarms R von der Stromversorgung im Grundzustand sind die Relaiskontakte 3a, 3b und 4a, 4b in der ersten Stellung geöffnet und in der zweiten Stellung geschlossen.

Die Steuereinheit CPU, die ein Computerprozessor sein kann, bringt beide in Reihe geschaltete Relaiskontakte 3a und 3b bzw. 4a und 4b in Abhängigkeit der Signale der Signalgeber von der geschlossenen Stellung in die geöffnete Stellung oder auch umgekehrt, wobei der Roboterarm R auch sicher angesteuert ist, wenn eines der beiden in Reihe geschalteten Relaiskontakte 3a oder 3b bzw. 4a oder 4b eine Fehlfunktion in Form beispielsweise eines Verschweißens der Relaiskontakte 3a oder 3b bzw. 4a oder 4b aufweisen sollte.

In dem dargestellten Ausführungsbeispiel müssen beide Ausgangsanschlüsse 2-O des Relaismoduls 2 mit der Stromversorgung verbunden sein, damit der Roboterarm R in Betrieb gehen kann. Ist einer der beiden Relaiskontakte 3a, 3b und 4a, 4b nicht geschlossen, bleibt der Roboterarm R außer Betrieb. Das heißt, mit der dargestellten Beschaltung des Relaismoduls 2 ist eine sichere, zweikanalig redundante Ansteuerung des Roboterarms R erzielt.

Erfindungsgemäß schaltet einer von den beiden in Reihe geschalteten Relaiskontakten 3a bzw. 4a durch eine Verzögerung eines Schaltens des anderen in Reihe geschalteten Relaiskontaktes 3b bzw. 4b voreilend, wobei die die Relaiskontakte 3a, 3b und 4a, 4b ansteuernde Steuereinheit CPU einen Zustand der Relaiskontakte 3a, 3b und 4a, 4b bestimmt und gemäß einer Zustandserfassung bzw. des erfassten Zustandes der Relaiskontakte 3a, 3b und 4a, 4b die Relaiskontakte 3a bzw. 3b und 4a bzw. 4b alternierend mit der Verzögerung ansteuert. Unter "voreilend" wird verstanden, dass ein von den beiden in Reihe geschaltete Relaiskontakt 3a bzw. 3b und 4a bzw. 4b immer vor dem anderen Relaiskontakt 3b bzw. 3a und 4b bzw. 4a schaltet.

Mit anderen Worten und bezogen auf das Ausführungsbeispiel in der Figur 1, die Steuereinheit CPU steuert die, näher an den Ausgangsanschlüssen 2-O befindlichen, Relaiskontakte 3b bzw. 4b mit der Verzögerung an, so dass die, weiter von den Ausgangsanschlüssen 2-O befindlichen, Relaiskontakte 3a bzw. 4a vor den jeweiligen, mit der Verzögerung angesteuerten, Relaiskontakten 3b bzw. 4b schaltet. Die Steuereinheit CPU erfasst dabei den Zustand der Relaiskontakte 3a, 3b und 4a, 4b und wechselt die Ansteuerung der Relaiskontakte 3b bzw. 4b mit der Verzögerung gemäß dem Zustand der Relaiskontakte 3a, 3b und 4a, 4b, so dass die bis dahin voreilend geschalteten Relaiskontakte 3a bzw. 4a nach den bis dahin verzögert geschalteten Relaiskontakten 3b bzw. 4b schaltet.

Das heißt, die voreilend geschaltete Relaiskontakte 3a bzw. 4a werden durch die Steuereinheit CPU mit der Verzögerung angesteuert, so dass die bis dahin mit der Verzögerung geschalteten Relaiskontakte 3b bzw. 4b jetzt voreilend geschaltet werden. Nach einer erneuten Erfassung des Zustandes der Relaiskontakte 3a, 3b und 4a, 4b wechselt die Steuereinheit CPU erneut die Ansteuerung mit Verzögerung bei den Relaiskontakten 3a, 3b und 4a, 4b, wodurch eine gleichmäßige Abnutzung der Relaiskontakte 3a, 3b und 4a, 4b gewährleistet werden kann, um die Lebensdauer des Relaismoduls 2 bzw. der modularen Sicherheitsrelaisschaltung 1 zu verlängern.

Hierbei umfasst die Steuereinheit CPU vorzugsweise ein Logikbaustein, der die Verzögerung beim Schalten der in Reihe geschalteten Relaiskontakte 3b bzw. 4b ausführt. Der Logikbaustein ermöglicht bei Bedarf eine schnelle und einfache Anpassung der Steuereinheit CPU, um gegebenenfalls die alternierende Ansteuerung der Relaiskontakte 3a, 3b und 4a, 4b mit der Verzögerung entsprechend der Zustandserfassung der Relaiskontakte 3a, 3b und 4a, 4b zu ändern.

Die Erfassung des Zustandes der Relaiskontakte 3a bzw. 3b oder 4a bzw. 4b umfasst beispielsweise eine Anzahl an getätigten Schaltzyklen der Relaiskontakte 3a bzw. 3b oder 4a bzw. 4b, um eine Reihenfolge der mit der Verzögerung angesteuerten Relaiskontakte 3a bzw. 3b oder 4a bzw. 4b zu wechseln. Das heißt, nach X getätigten Schaltzyklen, wobei X eine natürliche Zahl ist, werden die Relaiskontakte 3a bzw. 4a mit der Verzögerung angesteuert anstatt die bis dahin mit der Verzögerung angesteuerten Relaiskontakte 3b bzw. 4b. Nach weiteren Y getätigten Schaltzyklen, wobei Y eine natürliche Zahl ist, ändert die Steuereinheit CPU erneut die Reihenfolge der mit der Verzögerung angesteuerten Relaiskontakte 3b bzw. 4b.

Die natürliche Zahl Y der getätigten Schaltzyklen der Relaiskontakte 3a, 3b und 4a, 4b kann je nach Betriebsdauer des Relaismoduls 2 bzw. der Sicherheitsrelaisschaltung 1 gleich oder kleiner als die natürliche Zahl X der getätigten Schaltzyklen der Relaiskontakte 3a, 3b und 4a, 4b am Anfang des Betriebes des Relaismoduls 2 bzw. der Sicherheitsrelaisschaltung 1 sein. Hierdurch kann eine Dauer zwischen dem Wechseln der verzögerten Ansteuerung der Relaiskontakte 3a, 3b und 4a, 4b entsprechend der bisherigen Betriebsdauer verkürzt werden, so dass eine Abnutzung der Relaiskontakte 3a, 3b und 4a, 4b durch die Betriebsdauer beim alternierenden Wechseln der verzögerten Ansteuerung der Relaiskontakte 3a, 3b und 4a, 4b mit berücksichtigt werden kann. Dies führt zu einer erhöhten Sicherheit gegen Ausfall des Relaismoduls 2 bzw. der Sicherheitsrelaisschaltung 1.

Insbesondere ist, bei einem Übergang der Relaiskontakte 3a, 3b und 4a, 4b von der ersten, geschlossenen Stellung in die zweite, geöffnete Stellung, die Verzögerung des Schaltens der Relaiskontakte 3a bzw. 3b oder 4a bzw. 4b im einstelligen Millisekunden-Bereich, vorzugsweise 1 bis 5 Millisekunden. Das heißt, beim Abschaltvorgang des Roboterarms R ist ein schnelles Schalten der Relaiskontakte 3a, 3b und 4a, 4b sicherheitsrelevant, so dass die verzögerte Ansteuerung einer der beiden in Reihe geschalteten Relaiskontakte 3a, 3b und 4a, 4b keine relevante Erhöhung eines Antwortverhaltens des Relaismoduls 2 bzw. der Sicherheitsrelaisschaltung 1 bewirken darf.

Bei einem Übergang der Relaiskontakte 3a, 3b und 4a, 4b von der zweiten, geöffneten Stellung in die erste, geschlossene Stellung ist die Verzögerung des Schaltens der Relaiskontakte 3a, 3b und 4a, 4b im zwei- bis dreistelligen Millisekunden-Bereich, vorzugsweise mehrere 100 Millisekunden. Das heißt, der Einschaltvorgang des Roboterarms R ist weniger zeitkritisch, so dass die verzögerte Ansteuerung einer der beiden in Reihe geschalteten Relaiskontakte 3a, 3b und 4a, 4b ein erhöhtes Antwortverhaltens des Relaismoduls 2 bzw. der Sicherheitsrelaisschaltung 1 bewirken kann.

Weiterhin ermöglicht der Logikbaustein der Steuereinheit CPU einem Bediener, die Verzögerung des Schaltens der Relaiskontakte 3a, 3b und 4a, 4b manuell zu- oder abzuschalten. Durch das Zuschalten der Verzögerung des Schaltens der Relaiskontakte 3a, 3b und 4a, 4b kann der Bediener eine verbesserte, gleichmäßige Abnutzung der Relaiskontakte 3a, 3b und 4a, 4b und somit eine Erhöhung der Lebensdauer des Relaismoduls 2 bzw. der Sicherheitsrelaisschaltung 1 erzielen. Ist jedoch ein hohes, unverändertes Antwortverhalten des Relaismoduls 2 bzw. der Sicherheitsrelaisschaltung 1 aus Sicherheitsgründen gefordert, kann der Bediener die Verzögerung des Schaltens der Relaiskontakte 3a, 3b und 4a, 4b abschalten bzw. inaktiviert lassen.

### Bezugszeichenliste

- 1: Modulare Sicherheitsrelaisschaltung
- 2: Relaismodul
- 2-I: Eingangsanschluss des Relaismoduls
- 2-O: Ausgangsanschluss des Relaismoduls
- 3a, 3b, 4a, 4b: Relaiskontakte
- CPU: Steuereinheit
- K: Kamera
- LG: Lichtgitter
- R: Roboterarm

## Patentansprüche

1. Modulare Sicherheitsrelaisschaltung (1) zum sicheren Ein- und/oder Ausschalten zumindest einer Maschine (R), mit
zumindest einem Relaismodul (2), an dem die zumindest eine Maschine (R) angeschlossen ist, wobei das Relaismodul (2) mindestens zwei in Reihe geschaltete Relaiskontakte (3a, 3b; 4a, 4b) umfasst, die von einer ersten Stellung in eine zweite Stellung und umgekehrt bringbar sind, und wobei ein Relaiskontakt (3a; 4a) durch eine Verzögerung des anderen Relaiskontaktes (3b; 4b) voreilend schaltet, und
einer die Relaiskontakte (3a, 3b; 4a, 4b) ansteuernden Steuereinheit (CPU), **dadurch gekennzeichnet, dass** die Steuereinheit (CPU) die Relaiskontakte (3a, 3b; 4a, 4b) gemäß einer Zustandserfassung der Relaiskontakte (3a, 3b; 4a, 4b) alternierend mit der Verzögerung ansteuert.

2. Modulare Sicherheitsrelaisschaltung (1) nach Anspruch 1, wobei in der ersten Stellung die Relaiskontakte (3a, 3b; 4a, 4b) geschlossen und in der zweiten Stellung die Relaiskontakte (3a, 3b; 4a, 4b) geöffnet sind oder in der ersten Stellung die Relaiskontakte (3a, 3b; 4a, 4b) geöffnet und in der zweiten Stellung die Relaiskontakte (3a, 3b; 4a, 4b) geschlossen sind.

3. Modulare Sicherheitsrelaisschaltung (1) nach Anspruch 1 oder 2, wobei die Steuereinheit (CPU) ein Logikbaustein umfasst, der die Verzögerung beim Schalten des verzögert angesteuerten Relaiskontaktes (3a, 3b; 4a, 4b) ausführt.

4. Modulare Sicherheitsrelaisschaltung (1) nach einem der vorhergehenden Ansprüche 1 bis 3, wobei bei einem Übergang der Relaiskontakte (3a, 3b; 4a, 4b) von der ersten Stellung in die zweite Stellung die Verzögerung des Schaltens im einstelligen Millisekunden-Bereich ist.

5. Modulare Sicherheitsrelaisschaltung (1) nach einem der vorhergehenden Ansprüche 1 bis 4, wobei bei einem Übergang der Relaiskontakte (3a, 3b; 4a, 4b) von der zweiten Stellung in die erste Stellung die Verzögerung des Schaltens im zwei- bis dreistelligen Millisekunden-Bereich ist.

6. Modulare Sicherheitsrelaisschaltung (1) nach einem der vorhergehenden Ansprüche 1 bis 5, wobei die Zustandserfassung zum Wechseln des Relaiskontaktes (3a, 3b; 4a, 4b) mit der Verzögerung eine Anzahl an getätigten Schaltzyklen der Relaiskontakte (3a, 3b; 4a, 4b) umfasst.

7. Modulare Sicherheitsrelaisschaltung (1) nach einem der vorhergehenden Ansprüche 1 bis 6, wobei die Verzögerung durch einen Bediener manuell zu- oder abschaltbar ist.

## Claims

1. Modular safety relay circuit (1) for safely switching on and/or off at least one machine (R), having
at least one relay module (2), to which the at least one machine (R) is connected, the relay module (2) comprising at least two relay contacts (3a, 3b; 4a, 4b) which are connected in series and can be moved from a first position into a second position and vice versa, and one relay contact (3a; 4a) switching in a leading manner by a delay of the other relay contact (3b; 4b), and
a control unit (CPU) driving the relay contacts (3a, 3b; 4a, 4b), **characterized in that** the control unit (CPU) drives the relay contacts (3a, 3b; 4a, 4b) alternately with the delay in accordance with a status detection of the relay contacts (3a, 3b; 4a, 4b).

2. Modular safety relay circuit (1) according to claim 1, wherein in the first position the relay contacts (3a, 3b; 4a, 4b) are closed and in the second position the relay contacts (3a, 3b; 4a, 4b) are open or in the first position the relay contacts (3a, 3b; 4a, 4b) are open and in the second position the relay contacts (3a, 3b; 4a, 4b) are closed.

3. Modular safety relay circuit (1) according to claim 1 or 2, wherein the control unit (CPU) comprises a logic component which performs the delay in switching the delayed controlled relay contact (3a, 3b; 4a, 4b).

4. Modular safety relay circuit (1) according to one of the preceding claims 1 to 3, wherein in the case of a transition of the relay contacts (3a, 3b; 4a, 4b) from the first position to the second position, the delay of the switching is in the one-digit millisecond range.

5. Modular safety relay circuit (1) according to one of the preceding claims 1 to 4, wherein in the case of a transition of the relay contacts (3a, 3b; 4a, 4b) from the second position to the first position, the delay of the switching is in the two-digit to three-digit millisecond range.

6. Modular safety relay circuit (1) according to one of the preceding claims 1 to 5, wherein the status detection for changing the relay contact (3a, 3b; 4a, 4b) with the delay comprises a number of effected switching cycles of the relay contacts (3a, 3b; 4a, 4b).

7. Modular safety relay circuit (1) according to one of the preceding claims 1 to 6, wherein the delay can be manually switched on or off by an operator.

## Revendications

1. Circuit modulaire de relais de sécurité (1) pour la mise en marche et/ou l'arrêt en toute sécurité d'au moins une machine (R), comportant
au moins un module de relais (2), auquel au moins une machine (R) est raccordée, le module de relais (2) comprenant au moins deux contacts de relais (3a, 3b; 4a, 4b) qui sont raccordés en série et peuvent être déplacés d'une première position dans une deuxième position et vice versa, et un contact de relais (3a; 4a) commutant séquentiel par retard de l'autre contact de relais (3b; 4b), et
une unité de commande (CPU) commandant les contacts de relais (3a, 3b ; 4a, 4b), **caractérisée en ce que** l'unité de commande (CPU) commande les contacts de relais (3a, 3b; 4a, 4b) alternativement avec le retard en fonction d'une détection d'état des contacts de relais (3a, 3b; 4a, 4b).

2. Circuit de relais de sécurité modulaire (1) selon la revendication 1, dans lequel les contacts de relais (3a, 3b; 4a, 4b) sont fermés dans la première position et dans la deuxième position les contacts de relais (3a, 3b; 4a, 4b) sont ouverts ou dans la première position les contacts de relais (3a, 3b; 4a, 4b) sont ouverts et dans la deuxième position les contacts de relais (3a, 3b; 4a, 4b) sont fermés.

3. Circuit de relais de sécurité modulaire (1) selon la revendication 1 ou 2, dans lequel l'unité de commande (CPU) comprend un composant logique qui exécute le retard dans la commutation du contact de relais commandé retardé (3a, 3b; 4a, 4b).

4. Circuit de relais de sécurité modulaire (1) selon l'une des revendications précédentes 1 à 3, dans lequel, dans le cas d'une transition des contacts de relais (3a, 3b; 4a, 4b) de la première position à la deuxième position, le retard de la commutation est de l'ordre de un chiffre en millisecondes.

5. Circuit de relais de sécurité modulaire (1) selon l'une des revendications précédentes 1 à 4, dans lequel, dans le cas d'une transition des contacts de relais (3a, 3b; 4a, 4b) de la deuxième position à la première position, le retard de la commutation est de l'ordre entre deux à trois chiffres en millisecondes.

6. Circuit de relais de sécurité modulaire (1) selon l'une des revendications 1 à 5 précédentes, dans lequel la détection d'état pour modifier le contact de relais (3a, 3b; 4a, 4b) avec le retard comprend un nombre de cycles de commutation des contacts de relais (3a, 3b; 4a, 4b).

7. Circuit de relais de sécurité modulaire (1) selon l'une des revendications précédentes 1 à 6, dans lequel le retard peut être activé ou désactivé manuellement par un opérateur.
